# EUROPÄISCHE PATENTSCHRIFT

(11) **EP 4 134 568 B1**
(45) Veröffentlichungstag und Bekanntmachung des Hinweises auf die Patenterteilung: **02.07.2025**
(21) Anmeldenummer: 22187358.1
(22) Anmeldetag: 28.07.2022
(51) Int. Cl.: F16H 3/66, B62M 11/14, B62M 11/18

(54) **ZUGKRAFTUNTERBRECHUNGSFREIES LASTSCHALTGETRIEBE FÜR FAHRRÄDER**
POWER SHIFT TRANSMISSION WITH NO INTERRUPTION OF TRACTION FORCE FOR BICYCLES
BOÎTE DE VITESSES À COMMANDE SOUS CHARGE SANS INTERRUPTION DE LA FORCE DE TRACTION POUR BICYCLETTES

(30) Priorität: 13.08.2021 DE 102021208884; 08.11.2021 DE 102021212513
(43) Veröffentlichungstag der Anmeldung: 15.02.2023
(73) Patentinhaber: ZF Friedrichshafen AG, 88046 Friedrichshafen (DE)
(72) Erfinder: Ziemer, Peter, 86825 Bad Woerishofen (DE)

(56) Entgegenhaltungen:
- DE-A1- 10 162 886
- DE-A1- 102016 225 144
- DE-A1- 102016 225 168
- DE-A1- 102017 216 502

## Beschreibung

Die beanspruchte Erfindung bezieht sich auf das technische Gebiet der Fahrradgetriebe.

Die Druckschrift DE 1 99 49 507 offenbart Getriebe, die für den Einsatz in Fahrrädern vorgeschlagen werden. Diese Getriebe zeichnen sich dadurch aus, dass beim Umschalten von einem Gang in den nächsthöheren bzw. nächstniedrigeren Gang nur ein Schaltelement geöffnet und ein Schaltelement geschlossen wird. Auf diese Weise lassen sich schaltqualitätskritische Gruppenschaltungen, bei denen mehrere Schaltelemente gleichzeitig geschaltet werden müssen, vermeiden. Als Schaltelemente sind neben Bremsen auch Kupplungen vorgesehen. Kupplungen sind aber aufwändig zu betätigen und daher für den Einsatz in Fahrrädern ungeeignet.

Aus der Druckschrift DE 10 2017 216 502 A1 ist ein an einem Tretlager eines Fahrrads angeordnetes Schaltgetriebe bekannt, bei dem Lastschaltfähigkeit und Zugkraftunterbrechungsfreiheit durch Kopplung von Sonnenrädern mit Mitnehmerelementen erreicht wird. Die Mitnehmerelemente lassen sich steuerbar abbremsen und arretieren. Das Getriebe weist zwei hintereinandergeschaltete Stufenplanetengetriebe auf. Dies bedingt schaltqualitätskritische Gruppenschaltungen.

Die Druckschrift DE 10 2016 225144 A1 offenbart in seiner Fig.4 ein Mehrgangplanetengetriebe für ein Fahrrad mit drei Planetenradsätzen, drei Bremsen, einem Freilauf und zwei Kupplungen, von denen eine laut Absatz [0013] der Beschreibung ebenfalls als Freilauf ausgestaltet sein kann.

Der Erfindung liegt die Aufgabe zugrunde, ein verbessertes lastschaltbares Getriebe verfügbar zu machen, das eine hoher Schaltqualität bietet. Diese Aufgabe wird durch die unabhängigen Ansprüche gelöst. Die unabhängigen Ansprüche 1 bis 6 definieren jeweils ein Getriebe, für welches Schutz begehrt wird. Der unabhängige Anspruch 7 definiert ein Fahrrad, für welches Schutz begehrt wird.

Bevorzugte Ausführungsbeispiele der Erfindung sind in den Figuren dargestellt. Im Einzelnen zeigt:
Fig. 1 ein Getriebe mit vier Gängen,
Fig. 2 ein Getriebe mit sechs Gängen,
Fig. 3 ein Getriebe mit neun Gängen,
Fig. 4 ein Getriebe mit vier Gängen,
Fig. 5 ein Getriebe mit sechs Gängen, und
Fig. 6 ein Getriebe mit neun Gängen.

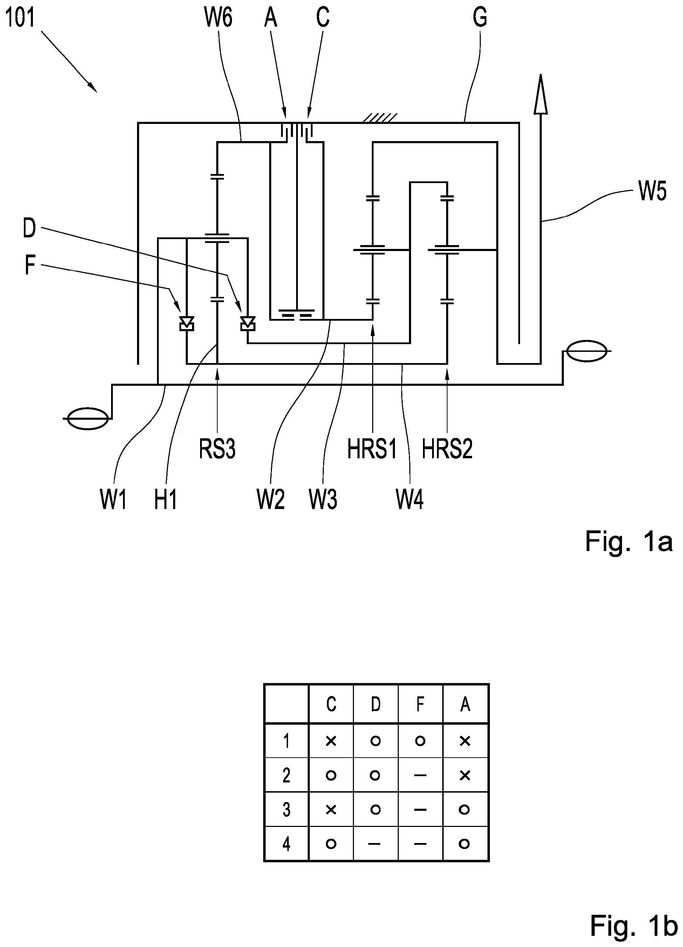

Das in Fig. 1 dargestellte Getriebe 101 basiert auf zwei Planetenradsätzen HRS1, HRS2, die zusammen ein Teilgetriebe bilden, das eine Welle W1, eine Welle W2, eine Welle W3, eine Welle W4 und eine Welle W5 verbindet. Dazu ist die Welle W1 drehfest mit einem Sonnenrad des Planetenradsatzes HRS2 verbunden. Drehfest mit einem Sonnenrad des Planetenradsatzes HRS1 ist die zweite Welle W2 verbunden. Die dritte Welle W3 bildet drehfeste Verbindungen zu einem Planetenträger des ersten Planetenradsatzes HRS1 und einem Hohlrad des zweiten Planetenradsatzes HRS2 aus. Drehfest mit einem Hohlrad des Planetenradsatzes HRS1 und einem Planetenträger des Planetenradsatzes HRS2 ist die Welle W5 verbunden.

Über einen weiteren Planetenradsatz RS3 sind eine Hilfswelle H1, die Welle W1 und die Welle W6 gekoppelt. Dabei besteht eine drehfeste Verbindung zwischen der Welle W1 und einem Planetenträger des Planetenradsatzes RS3. Ein Sonnenrad des Planetenradsatzes RS3 ist drehfest mit der Hilfswelle H1 verbunden. Ebenso besteht zwischen einem Hohlrad des Planetenradsatzes RS3 und der Welle W6 eine drehfeste Verbindung. Die Hilfswelle H1 wiederum ist drehfest mit der Welle W4 verbunden. Dies wiederum bedeutet, dass zwischen dem Sonnenrad des Planetenradsatzes RS3 und dem Sonnenrad des Planetenradsatzes HRS2 eine drehfeste Verbindung besteht.

Das Getriebe 101 weist zwei Bremsen A, C auf. Über die Bremse A lässt sich die Welle W6 drehfest mit einem Getriebegehäuse G des Getriebes 101 verbinden. Mittels der Bremse C ist die Welle W2 drehfest mit dem Gehäuse G verbindbar.

Das Getriebe 101 weist darüber hinaus zwei Freiläufe F, D auf. Der Freilauf F koppelt die Welle W1 mit der Welle W4. Über den Freilauf D ist die Welle W1 darüber hinaus mit der Welle W3 gekoppelt. Bezüglich der Welle W1 weisen die beiden Freiläufe F, D übereinstimmende Sperr- und Überholrichtungen auf.

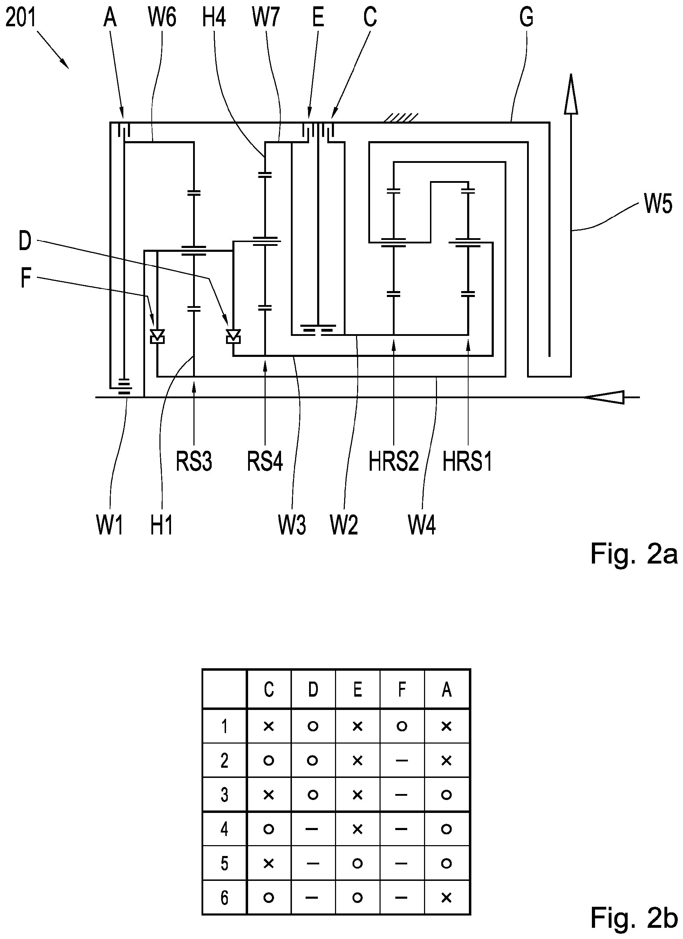

Das in Fig. 2 dargestellte Getriebe 201 weist neben den Planetenradsätzen HRS1, HRS2 und RS3 einen Planetenradsatz RS4 auf. Die Planetenradsätze HRS1 und HRS2 bilden auch hier ein Teilgetriebe, das die Wellen W2, W3, W4 und W5 koppelt. Die Welle W2 ist drehfest mit den Sonnenrädern der beiden Planetenradsätze verbunden. Eine drehfeste Verbindung besteht zudem zwischen der Welle W3 und dem Planetenträger des Planetenradsatzes HRS1. Die Welle W4 ist drehfest mit dem Hohlrad des Planetenradsatzes HRS2 verbunden. Der Planetenträger des Planetenradsatzes HRS2 und das Hohlrad des Planetenradsatzes HRS1 sind jeweils drehfest mit der Welle W5 verbunden.

Die Einbindung des Planetenradsatzes RS3 in das Getriebe 201 entspricht dem Getriebe 101.

Auch die Anbindung der Bremsen A und C in dem Getriebe 201 entspricht dem Getriebe 101. Darüber hinaus weist das Getriebe 201 eine Bremse E auf. Mit dieser lässt sich eine Welle W7 drehfest mit dem Getriebegehäuse G verbinden.

Eine Hilfswelle H4 ist drehfest mit der Welle W7 verbunden. Die Hilfswelle wiederum H4 ist drehfest mit einem Hohlrad des Planetenradsatzes RS4 verbunden. Dadurch kommt eine drehfeste Verbindung zwischen der Welle W7 und dem Hohlrad des Planetenradsatzes RS4 zustande.

Ein Planetenträger des Planetenradsatzes RS4 ist drehfest mit der Welle W1 verbunden. Somit besteht insbesondere eine drehfeste Verbindung zwischen dem Planetenträger des Planetenradsatzes RS3 und dem Planetenträger des Planetenradsatzes RS4.

Das Sonnenrad des Planetenradsatzes RS4 ist drehfest mit der Welle W3 verbunden. Die Welle W3 verbindet also das Sonnenrad des Planetenradsatzes RS4 drehfest mit dem Planetenträger des Planetenradsatzes HRS1.

Die Einbindung der Freiläufe F und D in das Getriebe 201 entspricht dem Getriebe 101.

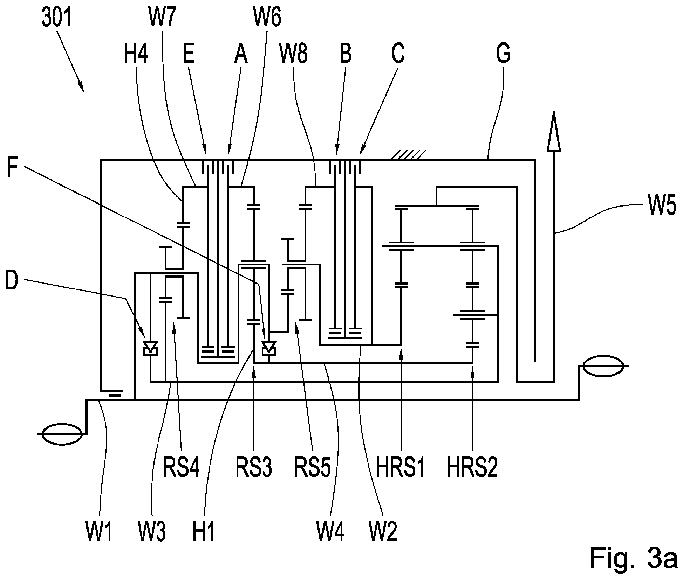

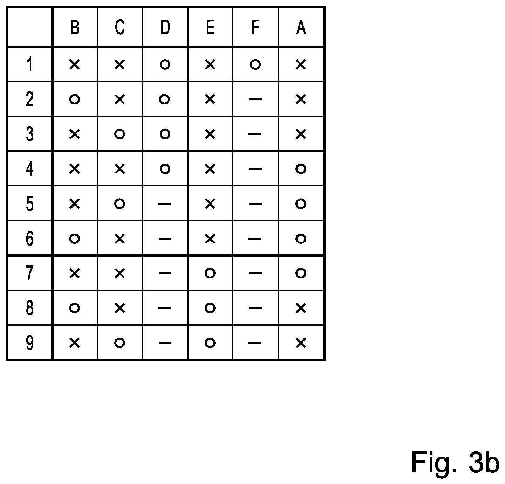

Auch in dem in Fig. 3 dargestellten Getriebe 301 verbindet das aus den Planetenradsätzen HRS1 und HRS2 bestehende Teilgetriebe die Wellen W2, W3, W4 und W5 miteinander. Die Welle W2 ist dazu drehfest mit dem Sonnenrad des Planetenradsatzes HRS1 verbunden. Drehfeste Verbindungen bestehen darüber hinaus zwischen der Welle W3 und dem Planetenträger des Planetenradsatzes HRS1 sowie dem Planetenträger des Planetenradsatzes HRS2. Die Welle W4 ist drehfest mit dem Sonnenrad des Planetenradsatzes HRS2 verbunden. Weiterhin besteht eine drehfeste Verbindung zwischen den Hohlrädern der beiden Planetenradsätze und der Welle W5.

Die Planetenräder des Planetenradsatzes HRS2 des Getriebes 301 kämmen nicht, wie die Planetenräder der übrigen Planetenradsätze der hier beschriebenen Ausführungsbeispiele mit dem jeweiligen Sonnenrad und dem jeweiligen Hohlrad, sondern jeweils mit einem weiteren Planetenrad des Planetenradsatzes HRS2 des Getriebes 301 und entweder mit dem Hohlrad oder dem Sonnenrad dieses Planetenradsatzes.

Die Einbindung des Planetenradsatzes RS3 in das Getriebe 301 entspricht dem Getriebe 201.

Auch die Einbindung des Planetenradsatzes RS4 des Getriebes 301 entspricht dem Getriebe 201. Im Unterschied zu dem Getriebe 201 weist der Planetenradsatz RS4 des Getriebes 301 allerdings Stufenplaneten auf.

Neben den Bremsen A, C und E, deren Einbindung in das Getriebe 301 dem Getriebe 201 entspricht, weist das Getriebe 301 eine Bremse B auf. Mit dieser lässt sich eine Welle W8 drehfest mit dem Getriebegehäuse G verbinden.

Drehfest mit der Welle W8 verbunden ist ein Hohlrad eines weiteren Planetenradsatzes RS5. Dessen Planetenträger ist drehfest mit der Welle W2 und über die Welle W2 drehfest mit dem Sonnenrad des Planetenradsatzes HRS1 verbunden. Ein Sonnenrad des Planetenradsatzes RS5 ist ebenso wie der Planetenträger des Planetenradsatzes RS3 und der Planetenträger des Planetenradsatzes RS4 drehfest mit der Welle W1 verbunden. Die Planetenräder des Planetenradsatzes RS5 sind als Stufenplaneten ausgestaltet.

Die Einbindung der Freiläufe D und F in das Getriebe 301 entspricht dem Getriebe 101.

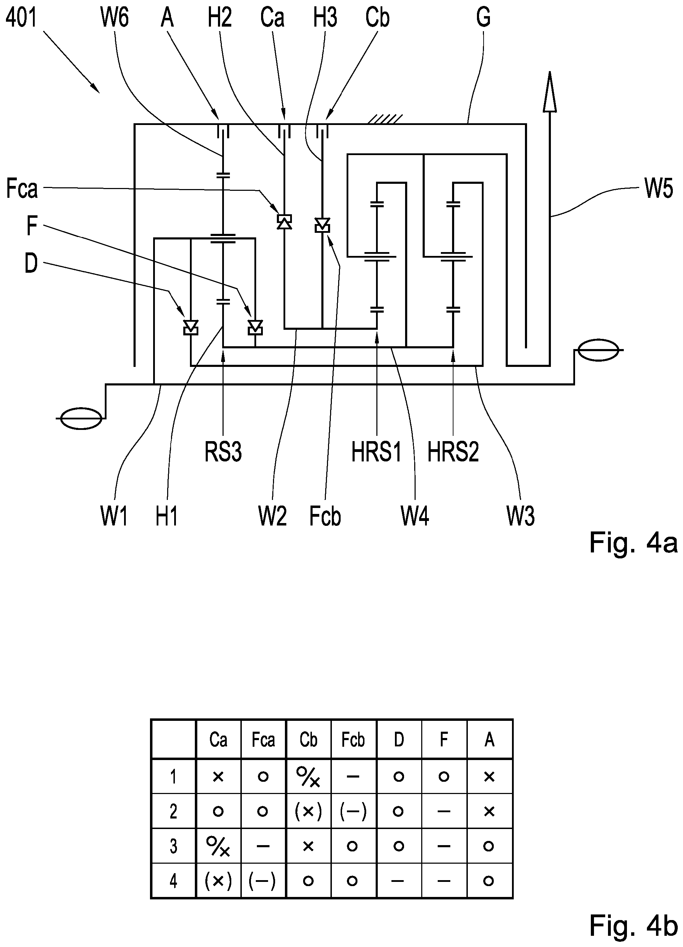

Das in Fig. 4 dargestellte Getriebe 401 weist wie das Getriebe 101 aus Fig. 1 lediglich drei Planetenradsätze HRS1, HRS2 und RS3 auf. Die Planetenradsätze HRS1 und HRS2 verbinden die Wellen W2, W3, W4 und W5 miteinander. Im Einzelnen ist die Welle W2 drehfest mit dem Sonnenrad des Planetenradsatzes HRS1 verbunden. Weiterhin besteht zwischen der Welle W3 und dem Hohlrad des Planetenradsatzes HRS2 eine drehfeste Verbindung. Das Hohlrad des Planetenradsatzes HRS1 ist drehfest mit der Welle W4 verbunden. Die Planetenträger der beiden Planetenradsätze sind drehfest miteinander und drehfest mit der Welle W5 verbunden.

Anstelle der Bremse C weist das Getriebe 401 zwei Hilfswellenbremsen Ca und Cb auf. Mittels der Hilfswellenbremse Ca ist eine Hilfswelle H2 drehfest mit dem Gehäuse verbindbar. Entsprechend ist mittels der Hilfswellenbremse Cb eine Hilfswelle H3 drehfest mit dem Gehäuse G verbindbar.

Die Hilfswellen H2 und H3 sind mit jeweils einem Hilfswellenfreilauf Fca bzw. Fcb mit der Welle W2 verbunden. Beide Hilfswellenfreiläufe Fca und Fcb weisen unterschiedliche Wirkrichtungen auf. So sind die Sperrrichtungen beider Hilfswellenfreiläufe Fca und Fcb bezüglich der zweiten Welle einander entgegengerichtet. Entsprechend sind auch ihre Überholrichtungen einander entgegengerichtet.

Die Einbindung der Freiläufe D und F in das Getriebe 401 entspricht dem Getriebe 101.

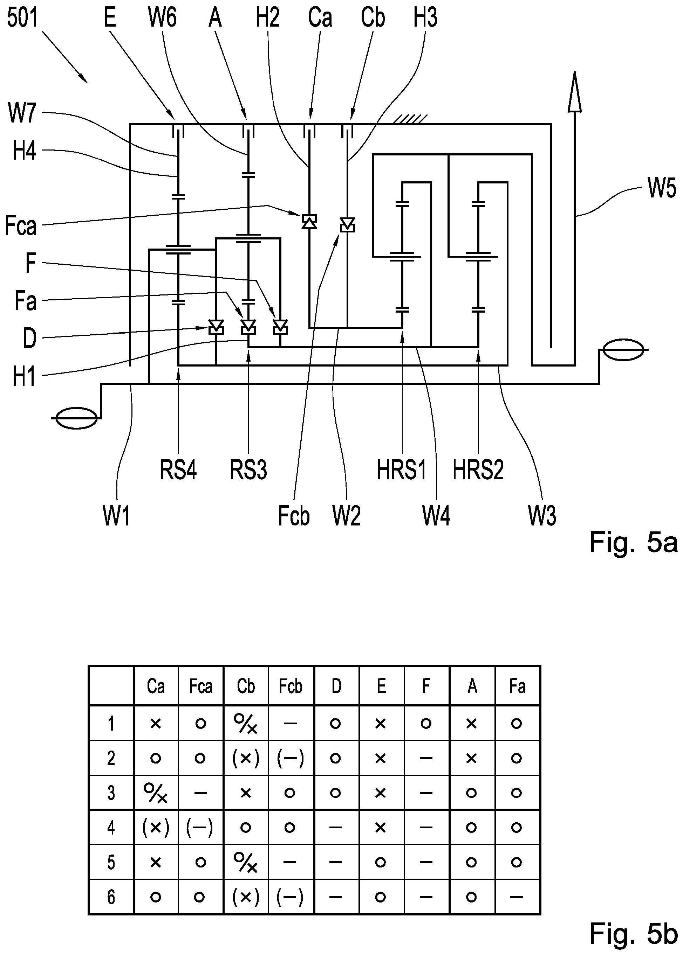

Das in Fig. 5 dargestellte Getriebe 501 entspricht weitestgehend dem Getriebe 401. Im Unterschied zu dem Getriebe 401 weist es einen vierten Planetenradsatz RS4 mit einer Hilfswelle H4 und einer Welle W7 auf. Deren Einbindung in das Getriebe 501 entspricht dem Getriebe 201.

Im Unterschied zu den Getrieben 201 und 401 ist die Hilfswelle H1 des Getriebes 501 nicht drehfest mit der Welle W4 verbunden, sondern über einen Hilfswellenfreilauf FA mit dieser gekoppelt. Die Orientierung des Hilfswellenfreilaufs Fa bezüglich der Welle W4 entspricht der Orientierung des Freilaufs F.

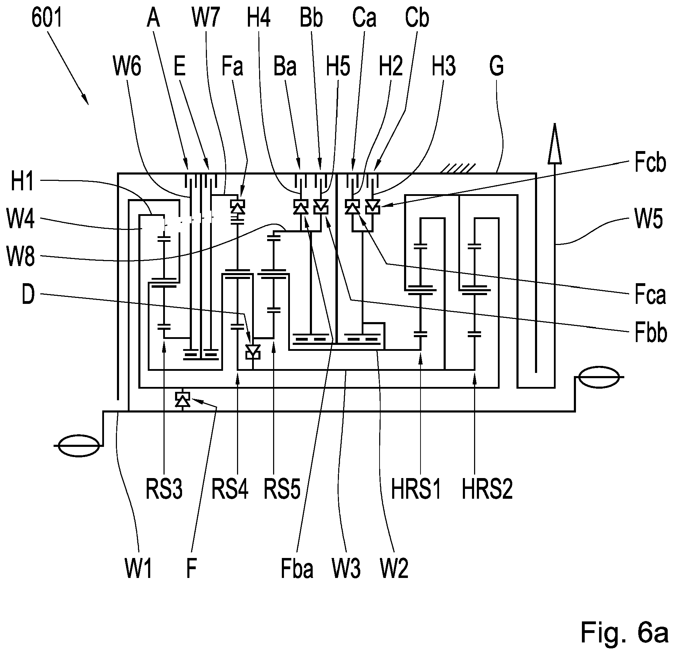

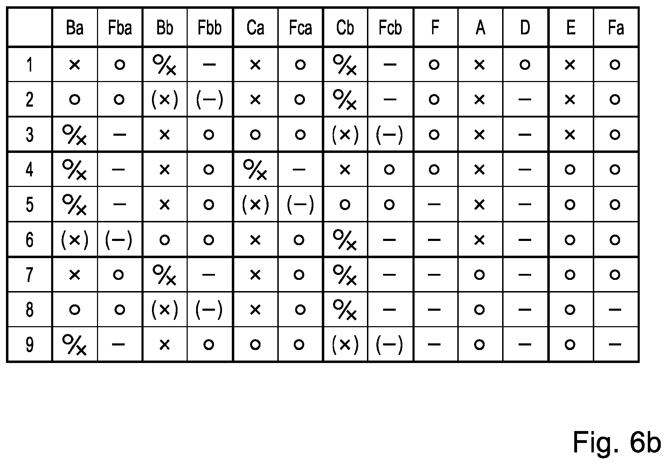

Das in Fig. 6 dargestellte Getriebe 601 geht aus dem Getriebe 501 durch Integration eines fünften Planetenradsatzes RS5 hervor. Ein Sonnenrad des Planetenradsatzes RS5 ist drehfest mit der Welle W1 verbunden. Ein Planetenträger des Planetenradsatzes RS5 ist drehfest mit der Welle W2 verbunden. Die Einbindung des Hohlrads erfolgt über Hilfswellen H4, H5, Hilfswellenfreiläufe Fba, Fbb und Hilfswellenbremsen Ba, Bb.

Im Einzelnen sind die Hilfswellen H4 und H5 jeweils über einen Zwischenwellenfreilauf Fba oder Fbb mit dem Hohlrad des Planetenradsatzes RS5 gekoppelt. Dabei ist die Ausrichtung der Überhol- und Sperrrichtungen der Zwischenwellenfreiläufe Fba und Fbb bezüglich des Hohlrads einander entgegengerichtet. Die Hilfswelle H4 lässt sich mittels der Hilfswellenbremse Ba drehfest mit dem Gehäuse G verbinden. Entsprechend lässt sich die Hilfswelle H5 mittels der Hilfswellenbremse Bc drehfest mit dem Gehäuse G verbinden.

### Bezugszeichen

- 101: Getriebe
- 201: Getriebe
- 301: Getriebe
- 401: Getriebe
- 501: Getriebe
- 601: Getriebe
- W1: Welle
- W2: Welle
- W3: Welle
- W4: Welle
- W5: Welle
- W6: Welle
- W7: Welle
- W8: Welle
- HRS1: Planetenradsatz
- HRS2: Planetenradsatz
- RS3: Planetenradsatz
- RS4: Planetenradsatz
- RS5: Planetenradsatz
- F: Freilauf
- D: Freilauf
- G: Gehäuse
- H1: Hilfswelle
- H2: Hilfswelle
- H3: Hilfswelle
- H4: Hilfswelle
- H5: Hilfswelle
- Ba: Hilfswellenbremse
- Bb: Hilfswellenbremse
- Ca: Hilfswellenbremse
- Cb: Hilfswellenbremse
- Fba: Hilfswellenfreilauf
- Fbb: Hilfswellenfreilauf
- Fca: Hilfswellenfreilauf
- Fcb: Hilfswellenfreilauf
- Fa: Hilfswellenfreilauf
- Ca: Hilfswellenbremse
- Cb: Hilfswellenbremse
- Ba: Hilfswellenbremse
- Bb: Hilfswellenbremse

## Patentansprüche

1. Getriebe (101) für ein Fahrrad mit einer ersten Welle (W1), einer zweiten Welle (W2), einer dritten Welle (W3), einer vierten Welle (W4), einer fünften Welle (W5), einer sechsten Welle (W6), einem ersten Teilgetriebe (HRS1, HRS2), einem zweiten Teilgetriebe (RS3), einem ersten Freilauf (D), einem zweiten Freilauf (F), einer ersten Bremse (A), einer zweiten Bremse (C) und einem Gehäuse (G);
wobei das erste Teilgetriebe (HRS1, HRS2) einen ersten Planetenradsatz (HRS1) und einen zweiten Planetenradsatz (HRS2) aufweist,
wobei der erste Planetenradsatz (HRS1) ein erstes Sonnenrad, welches drehfest mit der zweiten Welle (W2) ausgebildet ist, einen ersten Planetenträger, welcher drehfest mit der dritten Welle (W3) ausgebildet ist, und ein erstes Hohlrad aufweist,
wobei der zweite Planetenradsatz (HRS2) ein zweites Sonnenrad, welches drehfest mit der vierten Welle (W4) ausgebildet ist, einen zweiten Planetenträger, welcher drehfest mit der fünften Welle (W5) ausgebildet ist, und ein zweites Hohlrad aufweist,
wobei der erste Planetenträger drehfest mit dem zweiten Hohlrad verbunden ist,
wobei das erste Hohlrad drehfest mit dem zweiten Planetenträger verbunden ist,
wobei das zweite Teilgetriebe (RS3) einen dritten Planetenradsatz (RS3) aufweist, wobei der dritte Planetenradsatz (RS3) ein drittes Sonnenrad, welches drehfest mit der vierten Welle (W4) ausgebildet ist, einen dritten Planetenträger, welcher drehfest mit der ersten Welle (W1) ausgebildet ist, und ein drittes Hohlrad, welches drehfest mit der sechsten Welle (W6) ausgebildet ist, aufweist,
wobei das dritte Sonnenrad drehfest mit dem zweiten Sonnenrad verbunden ist,
wobei die erste Welle (W1) eine Eingangswelle des Getriebes (101) ausbildet und zum Verbinden mit Tretkurbeln eines Fahrrads ausgebildet ist,
wobei die fünfte Welle (W5) eine Ausgangswelle des Getriebes (101) ausbildet,
wobei eine erste Bremse (A) mit der sechsten Welle (W6) verbunden ist, womit die sechste Welle (W6) drehfest mit dem Gehäuse (G) mittels der ersten Bremse (A) verbindbar ist; wobei
die zweite Welle (W2) mittels einer zweiten Bremse (C) drehfest mit dem Gehäuse (G)
verbindbar ist;
wobei der erste Planetenradsatz (HRS1), der zweite Planetenradsatz (HRS2) und der dritte Planetenradsatz (RS3) jeweils als einfacher Minus-Planetenradsatz ausgebildet sind, und wobei
der erste Freilauf (D) die dritte Welle (W3) und der zweite Freilauf (F) die vierte Welle (W4) relativ zu der ersten Welle (W1) in gleiche Drehrichtungen sperren.

2. Getriebe (201) für ein Fahrrad mit einer ersten Welle (W1), einer zweiten Welle (W2), einer dritten Welle (W3), einer vierten Welle (W4), einer fünften Welle (W5), einer sechsten Welle (W6), einer siebten Welle (W7), einem ersten Teilgetriebe (HRS1, HRS2), einem zweiten Teilgetriebe (RS3, RS4), einem ersten Freilauf (D), einem zweiten Freilauf (F), einer ersten Bremse (A), einer zweiten Bremse (C), einer dritten Bremse (E) und einem Gehäuse (G);
wobei das erste Teilgetriebe (HRS1, HRS2) einen ersten Planetenradsatz (HRS1) und einen zweiten Planetenradsatz (HRS2) aufweist,
wobei der erste Planetenradsatz (HRS1) ein erstes Sonnenrad, welches drehfest mit der zweiten Welle (W2) ausgebildet ist, einen ersten Planetenträger, welcher drehfest mit der dritten Welle (W3) ausgebildet ist, und ein erstes Hohlrad aufweist,
wobei der zweite Planetenradsatz (HRS2) ein zweites Sonnenrad, einen zweiten Planetenträger, welcher drehfest mit der fünften Welle (W5) ausgebildet ist, und ein zweites Hohlrad, welches drehfest mit der vierten Welle (4) ausgebildet ist, aufweist,
wobei der erste Hohlrad drehfest mit dem zweiten Planetenträger verbunden ist,
wobei das zweite Teilgetriebe (RS3, RS4) einen dritten Planetenradsatz (RS3) aufweist,
wobei der dritte Planetenradsatz ein drittes Sonnenrad, welches drehfest mit der vierten Welle (W4) ausgebildet ist, einen dritten Planetenträger, welcher drehfest mit der ersten Welle (W1) ausgebildet ist, und ein drittes Hohlrad, welches drehfest mit der sechsten Welle (W6) ausgebildet ist, aufweist,
wobei das dritte Sonnenrad drehfest mit dem zweiten Hohlrad verbunden ist,
wobei die erste Welle (W1) eine Eingangswelle des Getriebes (201) ausbildet und zum Verbinden mit Tretkurbeln eines Fahrrads ausgebildet ist,
wobei die fünfte Welle (W5) eine Ausgangswelle des Getriebes (201) ausbildet,
wobei die erste Bremse (A) mit der sechsten Welle (W6) verbunden ist, womit die sechste Welle (W6) drehfest mit dem Gehäuse (G) mittels der ersten Bremse (A) verbindbar ist; wobei
die zweite Welle (W2) mittels der zweiten Bremse (C) drehfest mit dem Gehäuse (G)
verbindbar ist;
wobei das zweite Teilgetriebe (RS3, RS4)
ferner einen vierten Planetenradsatz (RS4) mit einem vierten Sonnenrad, welches drehfest mit der dritten Welle (W3) ausgebildet ist, einem vierten Planetenträger, welcher drehfest mit dem dritten Planetenträger ausgebildet ist, und einem vierten Hohlrad, welches drehfest mit der siebten Welle (W7) ausgebildet ist, aufweist;
wobei die dritte Bremse (E) mit der siebten Welle (W7) verbunden ist, womit die siebte Welle (W7) drehfest mit dem Gehäuse (G) mittels der dritten Bremse (E) verbindbar ist; wobei der erste Planetenradsatz (HRS1), der zweite Planetenradsatz (HRS2), der dritte Planetenradsatz (RS3) und der vierte Planetenradsatz (RS4) jeweils als einfacher Minus-Planetenradsatz ausgebildet sind,
und wobei
der erste Freilauf (D) die dritte Welle (W3) und der zweite Freilauf (F) die vierte Welle (W4) relativ zu der ersten Welle (W1) in gleiche Drehrichtungen sperren.

3. Getriebe (301) für ein Fahrrad mit einer ersten Welle (W1), einer zweiten Welle (W2), einer dritten Welle (W3), einer vierten Welle (W4), einer fünften Welle (W5), einer sechsten Welle (W6), einer siebten Welle (W7), einer achten Welle (W8), einem ersten Teilgetriebe (HRS1, HRS2), einem zweiten Teilgetriebe (RS3, RS4, RS5), einem ersten Freilauf
(D), einem zweiten Freilauf (F), einer ersten Bremse (A), einer zweiten Bremse (B), einer dritten Bremse (C), einer vierten Bremse (E) und einem Gehäuse (G);
wobei das erste Teilgetriebe (HRS1, HRS2) einen ersten Planetenradsatz (HRS1) und einen zweiten Planetenradsatz (HRS2) aufweist,
wobei der erste Planetenradsatz (HRS1) ein erstes Sonnenrad, welches drehfest mit der zweiten Welle (W2) ausgebildet ist, einen ersten Planetenträger, welcher drehfest mit der dritten Welle (W3) ausgebildet ist, und ein erstes Hohlrad aufweist,
wobei der zweite Planetenradsatz (HRS2) ein zweites Sonnenrad, welches drehfest mit der vierten Welle (W4) ausgebildet ist, einen zweiten Planetenträger, und ein zweites Hohlrad, welches drehfest mit der fünften Welle (W5) ausgebildet ist, aufweist,
wobei der erste Planetenträger drehfest mit dem zweiten Planetenträger verbunden ist, wobei das erste Hohlrad drehfest mit dem zweiten Hohlrad verbunden ist,
wobei das zweite Teilgetriebe (RS3, RS4, RS5)
einen dritten Planetenradsatz (RS3) aufweist,
wobei der dritte Planetenradsatz ein drittes Sonnenrad, welches drehfest mit der vierten Welle (W4) ausgebildet ist, einen dritten Planetenträger, welcher drehfest mit der ersten Welle (W1) ausgebildet ist, und ein drittes Hohlrad, welches drehfest mit der sechsten Welle (W6) ausgebildet ist, aufweist,
wobei das dritte Sonnenrad drehfest mit dem zweiten Sonnenrad verbunden ist,
wobei die erste Welle (W1) eine Eingangswelle des Getriebes (101) ausbildet und zum Verbinden mit Tretkurbeln eines Fahrrads ausgebildet ist,
wobei die fünfte Welle (W5) eine Ausgangswelle des Getriebes (101) ausbildet,
wobei die erste Bremse (A) mit der sechsten Welle (W6) verbunden ist, womit die sechste Welle (W6) drehfest mit dem Gehäuse (G) mittels der ersten Bremse (A) verbindbar ist; wobei
die zweite Welle (W2) mittels der dritten Bremse (C) drehfest mit dem Gehäuse (G)
verbindbar ist;
wobei das zweite Teilgetriebe (RS3, RS4, RS5)
ferner einen vierten Planetenradsatz (RS4) mit einem vierten Sonnenrad, welches drehfest mit der dritten Welle (W3) ausgebildet ist, einem vierten Planetenträger, welcher drehfest mit der ersten Welle (W1) ausgebildet ist, einem vierten Hohlrad, welches drehfest mit der siebten Welle (W7) ausgebildet ist;
wobei die vierte Bremse (E) mit der siebten Welle (W7) verbunden ist, womit die siebte Welle (W7) drehfest mit dem Gehäuse (G) mittels der vierten Bremse (E) verbindbar ist; wobei das zweite Teilgetriebe (RS3, RS4, RS5)
ferner einen fünften Planetenradsatz (RS5) mit einem fünften Sonnenrad, welches drehfest mit dem dritten Planetenträger ausgebildet ist, einem fünften Planetenträger, welcher drehfest mit der zweiten Welle (W2) ausgebildet ist, einem fünften Hohlrad, welches drehfest mit der achten Welle (W8) ausgebildet ist;
wobei die zweite Bremse (B) mit der achten Welle (W8) verbunden ist, womit die achte Welle (W8) drehfest mit dem Gehäuse (G) mittels der zweiten Bremse (B) verbindbar ist;
wobei der erste Planetenradsatz (HRS1) und der dritte Planetenradsatz (RS3) jeweils als einfacher Minus-Planetenradsatz ausdgebildet sind, wobei der zweite Planetenradsatz (HRS2) als einfacher Plus-Planetenradsatz ausgebildet ist;
wobei der vierte Planetenradsatz (RS4) als Minus-Planetenradsatz mit einem Stufenplaneten ausgebildet ist, dessen kleineres Planetenrad mit dem vierten Sonnenrad und dessen größeres Planetenrad mit dem vierten Hohlrad kämmt;
wobei der fünfte Planetenradsatz (RS4) als Minus-Planetenradsatz mit einem Stufenplaneten ausgebildet ist, dessen kleineres Planetenrad mit dem fünften Sonnenrad und dessen größeres Planetenrad mit dem fünften Hohlrad kämmt;
und wobei
der erste Freilauf (D) die dritte Welle (W3) und der zweite Freilauf (F) die vierte Welle (W4) relativ zu der ersten Welle (W1) in gleiche Drehrichtungen sperren.

4. Getriebe (401, 501) für ein Fahrrad mit einer ersten Welle (W1), einer zweiten Welle (W2), einer dritten Welle (W3), einer vierten Welle (W4), einer fünften Welle (W5), einer sechsten Welle (W6), einem ersten Teilgetriebe (HRS1, HRS2), einem zweiten Teilgetriebe (RS3), einem ersten Freilauf (D), einem zweiten Freilauf (F), einer ersten Bremse (A), einer zweiten Bremse (Ca), einer dritten Bremse (Cb), einem dritten Freilauf (Fca), einem vierten Freilauf (Fcb) und einem Gehäuse (G);
wobei das erste Teilgetriebe (HRS1, HRS2) einen ersten Planetenradsatz (HRS1) und einen zweiten Planetenradsatz (HRS2) aufweist,
wobei der erste Planetenradsatz (HRS1) ein erstes Sonnenrad, welches drehfest mit der zweiten Welle (W2) ausgebildet ist, einen ersten Planetenträger, und ein erstes Hohlrad aufweist,
wobei der zweite Planetenradsatz (HRS2) ein zweites Sonnenrad, welches drehfest mit der vierten Welle (W4) ausgebildet ist, einen zweiten Planetenträger, welcher drehfest mit der fünften Welle (W5) ausgebildet ist, und ein zweites Hohlrad, welches drehfest mit der dritten Welle (W3) ausgebildet ist, aufweist,
wobei der erste Planetenträger drehfest mit dem zweiten Planetenträger verbunden ist,
wobei das erste Hohlrad drehfest mit dem zweiten Sonnenrad verbunden ist,
wobei das zweite Teilgetriebe (RS3) einen dritten Planetenradsatz (RS3) aufweist,
wobei der dritte Planetenradsatz ein drittes Sonnenrad, welches drehfest mit der vierten Welle (W4) ausgebildet ist, einen dritten Planetenträger, welcher drehfest mit der ersten Welle (W1) ausgebildet ist, und ein drittes Hohlrad, welches drehfest mit der sechsten Welle (W6) ausgebildet ist, aufweist,
wobei das dritte Sonnenrad drehfest mit dem zweiten Sonnenrad verbunden ist,
wobei die erste Welle (W1) eine Eingangswelle des Getriebes (401, 501) ausbildet und zum Verbinden mit Tretkurbeln eines Fahrrads ausgebildet ist,
wobei die fünfte Welle (W5) eine Ausgangswelle des Getriebes (401, 501) ausbildet, wobei die erste Bremse (A) mit der sechsten Welle (W6) verbunden ist, womit die sechste Welle (W6) drehfest mit dem Gehäuse (G) mittels der ersten Bremse (A) verbindbar ist; wobei
die zweite Welle (W2) über den dritten Freilauf (Fca) mit der zweiten Bremse (Ca) verbindbar ist, wobei der dritte Freilauf (Fca) drehfest mit dem Gehäuse (G) mittels der zweiten Bremse (Ca) verbindbar ist,
die zweite Welle (W2) über den vierten Freilauf (Fcb) mit der dritten Bremse (Cb) verbindbar ist, wobei der vierte Freilauf (Fcb) drehfest mit dem Gehäuse (G) mittels der dritten Bremse (Cb) verbindbar ist;
wobei der dritte Freilauf (Fca) und der vierte Freilauf (Fcb) in entgegengesetzte Drehrichtungen der zweiten Welle (W2) sperren;
wobei der erste Planetenradsatz (HRS1), der zweite Planetenradsatz (HRS2) und der dritte Planetenradsatz (RS3) jeweils als einfacher Minus-Planetenradsatz ausgebildet sind, und wobei
der erste Freilauf (D) die dritte Welle (W3) und der zweite Freilauf (F) die vierte Welle (W4) relativ zu der ersten Welle (W1) in gleiche Drehrichtungen sperren.

5. Getriebe (401, 501) für ein Fahrrad mit einer ersten Welle (W1), einer zweiten Welle (W2), einer dritten Welle (W3), einer vierten Welle (W4), einer fünften Welle (W5), einer sechsten Welle (W6), einem ersten Teilgetriebe (HRS1, HRS2), einem zweiten Teilgetriebe (RS3), einem ersten Freilauf (D), einem zweiten Freilauf (F), einer ersten Bremse (A), einer zweiten Bremse (Ca), einer dritten Bremse (Cb), einer vierten Bremse (E), einem dritten Freilauf (Fca), einem vierten Freilauf (Fcb), einem fünften Freilauf (Fa), und einem Gehäuse (G);
wobei das erste Teilgetriebe (HRS1, HRS2) einen ersten Planetenradsatz (HRS1) und einen zweiten Planetenradsatz (HRS2) aufweist,
wobei der erste Planetenradsatz (HRS1) ein erstes Sonnenrad, welches drehfest mit der zweiten Welle (W2) ausgebildet ist, einen ersten Planetenträger, und ein erstes Hohlrad aufweist,
wobei der zweite Planetenradsatz (HRS2) ein zweites Sonnenrad, welches drehfest mit der vierten Welle (W4) ausgebildet ist, einen zweiten Planetenträger, welcher drehfest mit der fünften Welle (W5) ausgebildet ist, und ein zweites Hohlrad, welches drehfest mit der dritten Welle (W3) ausgebildet ist, aufweist,
wobei der erste Planetenträger drehfest mit dem zweiten Planetenträger verbunden ist, wobei das erste Hohlrad drehfest mit dem zweiten Sonnenrad verbunden ist,
wobei das zweite Teilgetriebe (RS3, RS4) einen dritten Planetenradsatz (RS3) aufweist,
wobei der dritte Planetenradsatz ein drittes Sonnenrad, welches über den fünften Freilauf
(Fa) mit der vierten Welle (W4) verbindbar ist, einen dritten Planetenträger, welcher drehfest mit der ersten Welle (W1) ausgebildet ist, und ein drittes Hohlrad, welches drehfest mit der sechsten Welle (W6) ausgebildet ist, aufweist,
wobei das dritte Sonnenrad drehfest mit dem zweiten Sonnenrad verbunden ist,
wobei die erste Welle (W1) eine Eingangswelle des Getriebes (401, 501) ausbildet und zum Verbinden mit Tretkurbeln eines Fahrrads ausgebildet ist,
wobei die fünfte Welle (W5) eine Ausgangswelle des Getriebes (401, 501) ausbildet, wobei die erste Bremse (A) mit der sechsten Welle (W6) verbunden ist, womit die sechste Welle (W6) drehfest mit dem Gehäuse (G) mittels der ersten Bremse (A) verbindbar ist; wobei
die zweite Welle (W2) über den dritten Freilauf (Fca) mit der zweiten Bremse (Ca) verbindbar ist, wobei der dritte Freilauf (Fca) drehfest mit dem Gehäuse (G) mittels der zweiten Bremse (Ca) verbindbar ist,
die zweite Welle (W2) über den vierten Freilauf (Fcb) mit der dritten Bremse (Cb) verbindbar ist, wobei der vierte Freilauf (Fcb) drehfest mit dem Gehäuse (G) mittels der dritten Bremse (Cb) verbindbar ist;
wobei der dritte Freilauf (Fca) und der vierte Freilauf (Fcb) in entgegengesetzte Drehrichtungen der zweiten Welle (W2) sperren;
wobei das zweite Teilgetriebe (RS3, RS4)
ferner einen vierten Planetenradsatz (RS4) mit einem vierten Sonnenrad, welches drehfest mit der dritten Welle (W3) ausgebildet ist, einem vierten Planetenträger, welcher drehfest mit der ersten Welle (W1) ausgebildet ist, einem vierten Hohlrad, welches drehfest mit der siebten Welle (W7) ausgebildet ist;
wobei die vierte Bremse (E) mit der siebten Welle (W7) verbunden ist, womit die siebte Welle (W7) drehfest mit dem Gehäuse (G) mittels der vierten Bremse (E) verbindbar ist; wobei der erste Planetenradsatz (HRS1), der zweite Planetenradsatz (HRS2), der dritte Planetenradsatz (RS3) und der vierte Planetenradsatz (RS4) jeweils als einfacher Minus-Planetenradsatz ausgebildet sind,
und wobei
der erste Freilauf (D) die dritte Welle (W3) und der zweite Freilauf (F) die vierte Welle (W4) relativ zu der ersten Welle (W1) in gleiche Drehrichtungen sperren.

6. Getriebe (601) für ein Fahrrad mit einer ersten Welle (W1), einer zweiten Welle (W2), einer dritten Welle (W3), einer vierten Welle (W4), einer fünften Welle (W5), einer sechsten Welle (W6), einer siebten Welle (W7), einer achten Welle (W8) einem ersten Teilgetriebe (HRS1, HRS2), einem zweiten Teilgetriebe (RS3, RS4, RS5), einem ersten Freilauf
(D), einem zweiten Freilauf (F), einem dritten Freilauf (Fca), einem vierten Freilauf (Fcb), einem fünften Freilauf (Fba), einem sechsten Freilauf (Fbb), einer ersten Bremse (A), einer zweiten Bremse (B), einer dritten Bremse (Ca), einer vierten Bremse (Cb), einer fünften Bremse (E), einer sechsten Bremse (Ba), einer siebten Bremse (Bb), einem siebten Freilauf (Fa) und einem Gehäuse (G); wobei das erste Teilgetriebe (HRS1, HRS2) einen ersten Planetenradsatz (HRS1) und einen zweiten Planetenradsatz (HRS2) aufweist,
wobei der erste Planetenradsatz (HRS1) ein erstes Sonnenrad, welches drehfest mit der zweiten Welle (W2) ausgebildet ist, einen ersten Planetenträger, und ein erstes Hohlrad aufweist,
wobei der zweite Planetenradsatz (HRS2) ein zweites Sonnenrad, welches drehfest mit der dritten Welle (W3)
ausgebildet ist, einen zweiten Planetenträger, welcher drehfest mit der fünften Welle (W5) ausgebildet ist, und ein zweites Hohlrad, welches drehfest mit der vierten Welle (W4) ausgebildet ist, aufweist, wobei der erste Planetenträger drehfest mit dem zweiten Planetenträger verbunden ist, wobei das erste Hohlrad drehfest mit dem zweiten Sonnenrad verbunden ist,
wobei das zweite Teilgetriebe (RS3, RS4, RS5) einen dritten Planetenradsatz (RS3) aufweist,
wobei der dritte Planetenradsatz ein drittes Sonnenrad, welches drehfest mit der sechsten Welle (W6) ausgebildet ist, einen dritten Planetenträger, welcher drehfest mit der ersten Welle (W1) ausgebildet ist, und ein drittes Hohlrad, welches drehfest mit der vierten Welle (W4) ausgebildet ist, aufweist,
wobei die erste Welle (W1) eine Eingangswelle des Getriebes (601) ausbildet und zum Verbinden mit Tretkurbeln eines Fahrrads ausgebildet ist,
wobei die fünfte Welle (W5) eine Ausgangswelle des Getriebes (601) ausbildet, wobei das zweite Teilgetriebe (RS3, RS4, RS5) ferner einen vierten Planetenradsatz (RS4) mit einem vierten Sonnenrad, welches drehfest mit der dritten Welle (W3) ausgebildet ist, einem vierten Planetenträger, welcher drehfest mit der ersten Welle (W1) ausgebildet ist, einem vierten Hohlrad, welches über den siebten Freilauf (Fa) mit der siebten
Welle (W7) verbindbar ist;
wobei die fünfte Bremse (E) mit der siebten Welle (W7) verbunden ist, womit die siebte Welle (W7) drehfest mit dem Gehäuse (G) mittels der vierten Bremse (E) verbindbar ist; wobei das zweite Teilgetriebe (RS3, RS4, RS5)
ferner einen fünften Planetenradsatz (RS5) mit einem fünften Sonnenrad, welches drehfest mit dem dritten Planetenträger ausgebildet ist, einem fünften Planetenträger, welcher drehfest mit der zweiten Welle (W2) ausgebildet ist, einem fünften Hohlrad, welches drehfest mit der achten Welle (W8) ausgebildet ist;
wobei die zweite Welle (W2) über den dritten Freilauf (Fca) mit der zweiten Bremse (Ca) verbindbar ist, wobei der dritte Freilauf (Fca) drehfest mit dem Gehäuse (G) mittels der zweiten Bremse (Ca) verbindbar ist,
die zweite Welle (W2) über den vierten Freilauf (Fcb) mit der dritten Bremse (Cb) verbindbar ist, wobei der vierte Freilauf (Fcb) drehfest mit dem Gehäuse (G) mittels der dritten Bremse (Cb) verbindbar ist;
wobei der dritte Freilauf (Fca) und der vierte Freilauf (Fcb) in entgegengesetzte Drehrichtungen der zweiten Welle (W2) sperren;
wobei die achte Welle (W8) über den fünften Freilauf (Fba) mit der sechsten Bremse (Ba) verbindbar ist, wobei der fünfte Freilauf (Fba) drehfest mit dem Gehäuse (G) mittels der sechsten Bremse (Ba) verbindbar ist,
die achte Welle (W8) über den sechsten Freilauf (Fbb) mit der siebten Bremse (Bb) verbindbar ist, wobei der sechste Freilauf (Fbb) drehfest mit dem Gehäuse (G) mittels der siebten Bremse (Bb) verbindbar ist;
wobei der fünfte Freilauf (Fba) und der sechste Freilauf (Fba) in entgegengesetzte Drehrichtungen der achten Welle (W8) sperren;
wobei die erste Bremse (A) mit der sechsten Welle (W6) verbunden ist, womit die sechste Welle (W6) drehfest mit dem Gehäuse (G) mittels der ersten Bremse (A) verbindbar ist;
wobei der erste Planetenradsatz (HRS1), der zweite Planetenradsatz (HRS2), der dritte Planetenradsatz (RS3), der vierte Planetenradsatz (RS4) und der fünfte Planetenradsatz (RS5) jeweils als einfacher Minus-Planetenradsatz ausgebildet sind, und wobei
der erste Freilauf (D) die dritte Welle (W3) und der zweite Freilauf (F) die vierte Welle (W4) relativ zu der ersten Welle (W1) in gleiche Drehrichtungen sperren.

7. Fahrrad; **gekennzeichnet durch**
ein Getriebe nach einem der vorhergehenden Ansprüche.

8. Fahrrad nach dem vorhergehenden Anspruch; **dadurch gekennzeichnet, dass** ein Kettenblatt des Fahrrads drehfest mit der fünften Welle (W5) verbunden ist.

## Claims

1. Transmission (101) for a bicycle with a first shaft (W1), a second shaft (W2), a third shaft (W3), a fourth shaft (W4), a fifth shaft (W5), a sixth shaft (W6), a first partial transmission (HRS1, HRS2), a second partial transmission (RS3), a first freewheel (D), a second freewheel (F), a first brake (A), a second brake (C) and a housing (G);
wherein the first partial transmission (HRS1, HRS2) has a first planetary gear set (HRS1) and a second planetary gear set (HRS2),
wherein the first planetary gear set (HRS1) has a first sun gear, which is rotationally conjointly formed with the second shaft (W2), a first planet carrier, which is rotationally conjointly formed with the third shaft (W3), and a first ring gear,
wherein the second planetary gear set (HRS2) has a second sun gear, which is rotationally conjointly formed with the fourth shaft (W4), a second planet carrier, which is rotationally conjointly formed with the fifth shaft (W5), and a second ring gear,
wherein the first planet carrier is rotationally conjointly connected to the second ring gear,
wherein the first ring gear is rotationally conjointly connected to the second planet carrier,
wherein the second partial transmission (RS3) has a third planetary gear set (RS3),
wherein the third planetary gear set (RS3) has a third sun gear, which is rotationally conjointly formed with the fourth shaft (W4), a third planet carrier, which is rotationally conjointly formed with the first shaft (W1), and a third ring gear, which is rotationally conjointly formed with the sixth shaft (W6),
wherein the third sun gear is rotationally conjointly connected to the second sun gear,
wherein the first shaft (W1) forms an input shaft of the transmission (101) and is designed for connecting to pedal cranks of a bicycle,
wherein the fifth shaft (W5) forms an output shaft of the transmission (101),
wherein a first brake (A) is connected to the sixth shaft (W6), whereby the sixth shaft (W6) is rotationally conjointly connectable to the housing (G) by means of the first brake (A);
wherein the second shaft (W2) is rotationally conjointly connectable to the housing (G) by means of a second brake (C);
wherein the first planetary gear set (HRS1), the second planetary gear set (HRS2) and the third planetary gear set (RS3) are each designed as a single minus planetary gear set,
and wherein the first freewheel (D) locks the third shaft (W3) and the second freewheel (F) locks the fourth shaft (W4) in the same directions of rotation relative to the first shaft (W1).

2. Transmission (201) for a bicycle with a first shaft (W1), a second shaft (W2), a third shaft (W3), a fourth shaft (W4), a fifth shaft (W5), a sixth shaft (W6), a seventh shaft (W7), a first partial transmission (HRS1, HRS2), a second partial transmission (RS3, RS4), a first freewheel (D), a second freewheel (F), a first brake (A), a second brake (C), a third brake (E) and a housing (G); wherein the first partial transmission (HRS1, HRS2) has a first planetary gear set (HRS1) and a second planetary gear set (HRS2),
wherein the first planetary gear set (HRS1) has a first sun gear, which is rotationally conjointly formed with the second shaft (W2), a first planet carrier, which is rotationally conjointly formed with the third shaft (W3), and a first ring gear,
wherein the second planetary gear set (HRS2) has a second sun gear, a second planet carrier, which is rotationally conjointly formed with the fifth shaft (W5), and a second ring gear, which is rotationally conjointly formed with the fourth shaft (4),
wherein the first ring gear is rotationally conjointly connected to the second planet carrier,
wherein the second partial transmission (RS3, RS4) has a third planetary gear set (RS3),
wherein the third planetary gear set has a third sun gear, which is rotationally conjointly formed with the fourth shaft (W4), a third planet carrier, which is rotationally conjointly formed with the first shaft (W1), and a third ring gear, which is rotationally conjointly formed with the sixth shaft (W6),
wherein the third sun gear is rotationally conjointly connected to the second ring gear,
wherein the first shaft (W1) forms an input shaft of the transmission (201) and is designed for connecting to pedal cranks of a bicycle,
wherein the fifth shaft (W5) forms an output shaft of the transmission (201),
wherein the first brake (A) is connected to the sixth shaft (W6), whereby the sixth shaft (W6) is rotationally conjointly connectable to the housing (G) by means of the first brake (A);
wherein the second shaft (W2) is rotationally conjointly connectable to the housing (G) by means of the second brake (C);
wherein the second partial transmission (RS3, RS4) furthermore has a fourth planetary gear set (RS4) with a fourth sun gear, which is rotationally conjointly formed with the third shaft (W3), a fourth planet carrier, which is rotationally conjointly formed with the third planet carrier, and a fourth ring gear, which is rotationally conjointly formed with the seventh shaft (W7);
wherein the third brake (E) is connected to the seventh shaft (W7), whereby the seventh shaft (W7) is rotationally conjointly connectable to the housing (G) by means of the third brake (E);
wherein the first planetary gear set (HRS1), the second planetary gear set (HRS2), the third planetary gear set (RS3) and the fourth planetary gear set (RS4) are each designed as a single minus planetary gear set,
and wherein the first freewheel (D) locks the third shaft (W3) and the second freewheel (F) locks the fourth shaft (W4) in the same directions of rotation relative to the first shaft (W1).

3. Transmission (301) for a bicycle with a first shaft (W1), a second shaft (W2), a third shaft (W3), a fourth shaft (W4), a fifth shaft (W5), a sixth shaft (W6), a seventh shaft (W7), an eighth shaft (W8), a first partial transmission (HRS1, HRS2), a second partial transmission (RS3, RS4, RS5), a first freewheel (D), a second freewheel (F), a first brake (A), a second brake (B), a third brake (C), a fourth brake (E) and a housing (G); wherein the first partial transmission (HRS1, HRS2) has a first planetary gear set (HRS1) and a second planetary gear set (HRS2),
wherein the first planetary gear set (HRS1) has a first sun gear, which is rotationally conjointly formed with the second shaft (W2), a first planet carrier, which is rotationally conjointly formed with the third shaft (W3), and a first ring gear,
wherein the second planetary gear set (HRS2) has a second sun gear, which is rotationally conjointly formed with the fourth shaft (W4), a second planet carrier, and a second ring gear, which is rotationally conjointly formed with the fifth shaft (W5),
wherein the first planet carrier is rotationally conjointly connected to the second planet carrier, wherein the first ring gear is rotationally conjointly connected to the second ring gear,
wherein the second partial transmission (RS3, RS4, RS5) has a third planetary gear set (RS3),
wherein the third planetary gear set has a third sun gear, which is rotationally conjointly formed with the fourth shaft (W4), a third planet carrier, which is rotationally conjointly formed with the first shaft (W1), and a third ring gear, which is rotationally conjointly formed with the sixth shaft (W6),
wherein the third sun gear is rotationally conjointly connected to the second sun gear,
wherein the first shaft (W1) forms an input shaft of the transmission (101) and is designed for connecting to pedal cranks of a bicycle,
wherein the fifth shaft (W5) forms an output shaft of the transmission (101),
wherein the first brake (A) is connected to the sixth shaft (W6), whereby the sixth shaft (W6) is rotationally conjointly connectable to the housing (G) by means of the first brake (A);
wherein the second shaft (W2) is rotationally conjointly connectable to the housing (G) by means of the third brake (C);
wherein the second partial transmission (RS3, RS4, RS5) furthermore has a fourth planetary gear set (RS4) with a fourth sun gear, which is rotationally conjointly formed with the third shaft (W3), a fourth planet carrier, which is rotationally conjointly formed with the first shaft (W1), a fourth ring gear, which is rotationally conjointly formed with the seventh shaft (W7);
wherein the fourth brake (E) is connected to the seventh shaft (W7), whereby the seventh shaft (W7) is rotationally conjointly connectable to the housing (G) by means of the fourth brake (E);
wherein the second partial transmission (RS3, RS4, RS5) furthermore has a fifth planetary gear set (RS5) with a fifth sun gear, which is rotationally conjointly formed with the third planet carrier, a fifth planet carrier, which is rotationally conjointly formed with the second shaft (W2), a fifth ring gear, which is rotationally conjointly formed with the eighth shaft (W8);
wherein the second brake (B) is connected to the eighth shaft (W8), whereby the eighth shaft (W8) is rotationally conjointly connectable to the housing (G) by means of the second brake (B);
wherein the first planetary gear set (HRS1) and the third planetary gear set (RS3) are each designed as a single minus planetary gear set, wherein the second planetary gear set (HRS2) is designed as a single plus planetary gear set;
wherein the fourth planetary gear set (RS4) is designed as a minus planetary gear set with a stepped planet, the smaller planetary gear of which meshes with the fourth sun gear and the larger planetary gear of which meshes with the fourth ring gear;
wherein the fifth planetary gear set (RS4) is designed as a minus planetary gear set with a stepped planet, the smaller planetary gear of which meshes with the fifth sun gear and the larger planetary gear of which meshes with the fifth ring gear;
and wherein the first freewheel (D) locks the third shaft (W3) and the second freewheel (F) locks the fourth shaft (W4) in the same directions of rotation relative to the first shaft (W1).

4. Transmission (401, 501) for a bicycle with a first shaft (W1), a second shaft (W2), a third shaft (W3), a fourth shaft (W4), a fifth shaft (W5), a sixth shaft (W6), a first partial transmission (HRS1, HRS2), a second partial transmission (RS3), a first freewheel (D), a second freewheel (F), a first brake (A), a second brake (Ca), a third brake (Cb), a third freewheel (Fca), a fourth freewheel (Fcb) and a housing (G);
wherein the first partial transmission (HRS1, HRS2) has a first planetary gear set (HRS1) and a second planetary gear set (HRS2),
wherein the first planetary gear set (HRS1) has a first sun gear, which is rotationally conjointly formed with the second shaft (W2), a first planet carrier, and a first ring gear,
wherein the second planetary gear set (HRS2) has a second sun gear, which is rotationally conjointly formed with the fourth shaft (W4), a second planet carrier, which is rotationally conjointly formed with the fifth shaft (W5), and a second ring gear, which is rotationally conjointly formed with the third shaft (W3),
wherein the first planet carrier is rotationally conjointly connected to the second planet carrier, wherein the first ring gear is rotationally conjointly connected to the second sun gear,
wherein the second partial transmission (RS3) has a third planetary gear set (RS3),
wherein the third planetary gear set has a third sun gear, which is rotationally conjointly formed with the fourth shaft (W4), a third planet carrier, which is rotationally conjointly formed with the first shaft (W1), and a third ring gear, which is rotationally conjointly formed with the sixth shaft (W6),
wherein the third sun gear is rotationally conjointly connected to the second sun gear,
wherein the first shaft (W1) forms an input shaft of the transmission (401, 501) and is designed for connecting to pedal cranks of a bicycle,
wherein the fifth shaft (W5) forms an output shaft of the transmission (401, 501),
wherein the first brake (A) is connected to the sixth shaft (W6), whereby the sixth shaft (W6) is rotationally conjointly connectable to the housing (G) by means of the first brake (A); wherein
the second shaft (W2) is connectable to the second brake (Ca) via the third freewheel (Fca), wherein the third freewheel (Fca) is rotationally conjointly connectable to the housing (G) by means of the second brake (Ca), the second shaft (W2) is connectable to the third brake (Cb) via the fourth freewheel (Fcb), wherein the fourth freewheel (Fcb) is rotationally conjointly connectable to the housing (G) by means of the third brake (Cb);
wherein the third freewheel (Fca) and the fourth freewheel (Fcb) lock in opposite directions of rotation of the second shaft (W2);
wherein the first planetary gear set (HRS1), the second planetary gear set (HRS2) and the third planetary gear set (RS3) are each designed as a single minus planetary gear set, and wherein
the first freewheel (D) locks the third shaft (W3) and the second freewheel (F) locks the fourth shaft (W4) relative to the first shaft (W1) in the same directions of rotation.

5. Transmission (401, 501) for a bicycle with a first shaft (W1), a second shaft (W2), a third shaft (W3), a fourth shaft (W4), a fifth shaft (W5), a sixth shaft (W6), a first partial transmission (HRS1, HRS2), a second partial transmission (RS3), a first freewheel (D), a second freewheel (F), a first brake (A), a second brake (Ca), a third brake (Cb), a fourth brake (E), a third freewheel (Fca), a fourth freewheel (Fcb), a fifth freewheel (Fa), and a housing (G);
wherein the first partial transmission (HRS1, HRS2) has a first planetary gear set (HRS1) and a second planetary gear set (HRS2),
wherein the first planetary gear set (HRS1) has a first sun gear, which is rotationally conjointly formed with the second shaft (W2), a first planet carrier, and a first ring gear,
wherein the second planetary gear set (HRS2) has a second sun gear, which is rotationally conjointly formed with the fourth shaft (W4), a second planet carrier, which is rotationally conjointly formed with the fifth shaft (W5), and a second ring gear, which is rotationally conjointly formed with the third shaft (W3),
wherein the first planet carrier is rotationally conjointly connected to the second planet carrier, wherein the first ring gear is rotationally conjointly connected to the second sun gear,
wherein the second partial transmission (RS3, RS4) has a third planetary gear set (RS3),
wherein the third planetary gear set has a third sun gear, which is connectable to the fourth shaft (W4) via the fifth freewheel (Fa), a third planet carrier, which is rotationally conjointly formed with the first shaft (W1), and a third ring gear, which is rotationally conjointly formed with the sixth shaft (W6),
wherein the third sun gear is rotationally conjointly connected to the second sun gear,
wherein the first shaft (W1) forms an input shaft of the transmission (401, 501) and is designed for connecting to pedal cranks of a bicycle,
wherein the fifth shaft (W5) forms an output shaft of the transmission (401, 501),
wherein the first brake (A) is connected to the sixth shaft (W6), whereby the sixth shaft (W6) is rotationally conjointly connectable to the housing (G) by means of the first brake (A); wherein
the second shaft (W2) is connectable to the second brake (Ca) via the third freewheel (Fca), wherein the third freewheel (Fca) is rotationally conjointly connectable to the housing (G) by means of the second brake (Ca), the second shaft (W2) is connectable to the third brake (Cb) via the fourth freewheel (Fcb), wherein the fourth freewheel (Fcb) is rotationally conjointly connectable to the housing (G) by means of the third brake (Cb); wherein the third freewheel (Fca) and the fourth freewheel (Fcb) lock in opposite directions of rotation of the second shaft (W2);
wherein the second partial transmission (RS3, RS4) furthermore has a fourth planetary gear set (RS4) with a fourth sun gear, which is rotationally conjointly formed with the third shaft (W3), a fourth planet carrier, which is rotationally conjointly formed with the first shaft (W1), a fourth ring gear, which is rotationally conjointly formed with the seventh shaft (W7);
wherein the fourth brake (E) is connected to the seventh shaft (W7), whereby the seventh shaft (W7) is rotationally conjointly connectable to the housing (G) by means of the fourth brake (E);
wherein the first planetary gear set (HRS1), the second planetary gear set (HRS2), the third planetary gear set (RS3) and the fourth planetary gear set (RS4) are each designed as a single minus planetary gear set,
and wherein the first freewheel (D) locks the third shaft (W3) and the second freewheel (F) locks the fourth shaft (W4) in the same directions of rotation relative to the first shaft (W1).

6. Transmission (601) for a bicycle with a first shaft (W1), a second shaft (W2), a third shaft (W3), a fourth shaft (W4), a fifth shaft (W5), a sixth shaft (W6), a seventh shaft (W7), an eighth shaft (W8), a first partial transmission (HRS1, HRS2), a second partial transmission (RS3, RS4, RS5), a first freewheel (D), a second freewheel (F), a third freewheel (Fca), a fourth freewheel (Fcb), a fifth freewheel (Fba), a sixth freewheel (Fbb), a first brake (A), a second brake (B), a third brake (Ca), a fourth brake (Cb), a fifth brake (E), a sixth brake (Ba), a seventh brake (Bb), a seventh freewheel (Fa) and a housing (G);
wherein the first partial transmission (HRS1, HRS2) has a first planetary gear set (HRS1) and a second planetary gear set (HRS2),
wherein the first planetary gear set (HRS1) has a first sun gear, which is rotationally conjointly formed with the second shaft (W2), a first planet carrier, and a first ring gear,
wherein the second planetary gear set (HRS2) has a second sun gear, which is rotationally conjointly formed with the third shaft (W3), a second planet carrier, which is rotationally conjointly formed with the fifth shaft (W5), and a second ring gear, which is rotationally conjointly formed with the fourth shaft (W4),
wherein the first planet carrier is rotationally conjointly connected to the second planet carrier, wherein the first ring gear is rotationally conjointly connected to the second sun gear,
wherein the second partial transmission (RS3, RS4, RS5) has a third planetary gear set (RS3),
wherein the third planetary gear set has a third sun gear, which is rotationally conjointly formed with the sixth shaft (W6), a third planet carrier, which is rotationally conjointly formed with the first shaft (W1), and a third ring gear, which is rotationally conjointly formed with the fourth shaft (W4),
wherein the first shaft (W1) forms an input shaft of the transmission (601) and is designed for connecting to pedal cranks of a bicycle,
wherein the fifth shaft (W5) forms an output shaft of the transmission (601),
wherein the second partial transmission (RS3, RS4, RS5) furthermore has a fourth planetary gear set (RS4) with a fourth sun gear, which is rotationally conjointly formed with the third shaft (W3), a fourth planet carrier, which is rotationally conjointly formed with the first shaft (W1), a fourth ring gear, which is connectable to the seventh shaft (W7) via the seventh freewheel (Fa); wherein the fifth brake (E) is connected to the seventh shaft (W7), whereby the seventh shaft (W7) is rotationally conjointly connectable to the housing (G) by means of the fourth brake (E);
wherein the second partial transmission (RS3, RS4, RS5) furthermore has a fifth planetary gear set (RS5) with a fifth sun gear, which is rotationally conjointly formed with the third planet carrier, a fifth planet carrier, which is rotationally conjointly formed with the second shaft (W2), a fifth ring gear, which is rotationally conjointly formed with the eighth shaft (W8);
wherein the second shaft (W2) is connectable to the second brake (Ca) via the third freewheel (Fca), wherein the third freewheel (Fca) is rotationally conjointly connectable to the housing (G) by means of the second brake (Ca),
the second shaft (W2) is connectable to the third brake (Cb) via the fourth freewheel (Fcb), wherein the fourth freewheel (Fcb) is rotationally conjointly connectable to the housing (G) by means of the third brake (Cb); wherein the third freewheel (Fca) and the fourth freewheel (Fcb) lock in opposite directions of rotation of the second shaft (W2);
wherein the eighth shaft (W8) is connectable to the sixth brake (Ba) via the fifth freewheel (Fba), wherein the fifth freewheel (Fba) is rotationally conjointly connectable to the housing (G) by means of the sixth brake (Ba),
the eighth shaft (W8) is connectable to the seventh brake (Bb) via the sixth freewheel (Fbb), wherein the sixth freewheel (Fbb) is rotationally conjointly connectable to the housing (G) by means of the seventh brake (Bb); wherein the fifth freewheel (Fba) and the sixth freewheel (Fba) lock in opposite directions of rotation of the eighth shaft (W8);
wherein the first brake (A) is connected to the sixth shaft (W6), whereby the sixth shaft (W6) is rotationally conjointly connectable to the housing (G) by means of the first brake (A);
wherein the first planetary gear set (HRS1), the second planetary gear set (HRS2), the third planetary gear set (RS3), the fourth planetary gear set (RS4) and the fifth planetary gear set (RS5) are each designed as a single minus planetary gear set, and wherein
the first freewheel (D) locks the third shaft (W3) and the second freewheel (F) locks the fourth shaft (W4) relative to the first shaft (W1) in the same directions of rotation.

7. Bicycle, **characterized by** a transmission according to any one of the preceding claims.

8. Bicycle according to the preceding claim, **characterized in that** a chain ring of the bicycle is rotationally conjointly connected to the fifth shaft (W5) .

## Revendications

1. Transmission (101) pour une bicyclette, comprenant un premier arbre (W1), un deuxième arbre (W2), un troisième arbre (W3), un quatrième arbre (W4), un cinquième arbre (W5), un sixième arbre (W6), une première transmission partielle (HRS1, HRS2), une deuxième transmission partielle (RS3), une première roue libre (D), une deuxième roue libre (F), un premier frein (A), un deuxième frein (C) et un boîtier (G) ;
la première transmission partielle (HRS1, HRS2) présentant un premier train planétaire (HRS1) et un deuxième train planétaire (HRS2),
le premier train planétaire (HRS1) présentant une première roue solaire qui est réalisée sous forme solidaire en rotation du deuxième arbre (W2), un premier porte-satellites qui est réalisée sous forme solidaire en rotation du troisième arbre (W3) et une première couronne,
le deuxième train planétaire (HRS2) présentant une deuxième roue solaire qui est réalisée sous forme solidaire en rotation du quatrième arbre (W4), un deuxième porte-satellites qui est réalisé sous forme solidaire en rotation du cinquième arbre (W5) et une deuxième couronne,
le premier porte-satellites étant relié de manière solidaire en rotation à la deuxième couronne,
la première couronne étant reliée de manière solidaire en rotation au deuxième porte-satellites,
la deuxième transmission partielle (RS3) présentant un troisième train planétaire (RS3),
le troisième train planétaire (RS3) présentant une troisième roue solaire qui est réalisée sous forme solidaire en rotation du quatrième arbre (W4), un troisième porte-satellites qui est réalisé sous forme solidaire en rotation du premier arbre (W1) et une troisième couronne qui est réalisée sous forme solidaire en rotation du sixième arbre (W6),
la troisième roue solaire étant reliée de manière solidaire en rotation à la deuxième roue solaire,
le premier arbre (W1) réalisant un arbre d'entrée de la transmission (101) et étant réalisé pour être relié à des pédaliers d'une bicyclette,
la cinquième arbre (W5) réalisant un arbre de sortie de la transmission (101),
un premier frein (A) étant relié au sixième arbre (W6), moyennant quoi le sixième arbre (W6) peut être relié de manière solidaire en rotation au boîtier (G) au moyen du premier frein (A) ;
le deuxième arbre (W2) pouvant être relié de manière solidaire en rotation au boîtier (G) au moyen d'un deuxième frein (C) ;
le premier train planétaire (HRS1), le deuxième train planétaire (HRS2) et le troisième train planétaire (RS3) étant chacun réalisés sous forme de train planétaire simple à rapport négatif,
et la première roue libre (D) bloquant le troisième arbre (W3) et la deuxième roue libre (F) bloquant le quatrième arbre (W4) par rapport au premier arbre (W1) dans des directions de rotation identiques.

2. Transmission (201) pour une bicyclette, comprenant un premier arbre (W1), un deuxième arbre (W2), un troisième arbre (W3), un quatrième arbre (W4), un cinquième arbre (W5), un sixième arbre (W6), un septième arbre (W7), une première transmission partielle (HRS1, HRS2), une deuxième transmission partielle (RS3, RS4), une première roue libre (D), une deuxième roue libre (F),
un premier frein (A), un deuxième frein (C), un troisième frein (E) et un boîtier (G) ;
la première transmission partielle (HRS1, HRS2) présentant un premier train planétaire (HRS1) et un deuxième train planétaire (HRS2),
le premier train planétaire (HRS1) présentant une première roue solaire qui est réalisée sous forme solidaire en rotation du deuxième arbre (W2), un premier porte-satellites qui est réalisée sous forme solidaire en rotation du troisième arbre (W3) et une première couronne,
le deuxième train planétaire (HRS2) présentant une deuxième roue solaire, un deuxième porte-satellites qui est réalisé sous forme solidaire en rotation du cinquième arbre (W5), et une deuxième couronne qui est réalisée sous forme solidaire en rotation du quatrième arbre (4), la première couronne étant reliée de manière solidaire en rotation au deuxième porte-satellites,
la deuxième transmission partielle (RS3, RS4) présentant un troisième train planétaire (RS3),
le troisième train planétaire présentant une troisième roue solaire qui est réalisée sous forme solidaire en rotation du quatrième arbre (W4), un troisième porte-satellites qui est réalisé sous forme solidaire en rotation du premier arbre (W1) et une troisième couronne qui est réalisée sous forme solidaire en rotation du sixième arbre (W6),
la troisième roue solaire étant reliée de manière solidaire en rotation à la deuxième couronne,
le premier arbre (W1) réalisant un arbre d'entrée de la transmission (201) et étant réalisé pour être relié à des pédaliers d'une bicyclette,
la cinquième arbre (W5) réalisant un arbre de sortie de la transmission (201),
le premier frein (A) étant relié au sixième arbre (W6), moyennant quoi le sixième arbre (W6) peut être relié de manière solidaire en rotation au boîtier (G) au moyen du premier frein (A) ;
le deuxième arbre (W2) pouvant être relié de manière solidaire en rotation au boîtier (G) au moyen du deuxième frein (C) ;
la deuxième transmission partielle (RS3, RS4) présentant en outre un quatrième train planétaire (RS4) avec une quatrième roue solaire qui est réalisée sous forme solidaire en rotation du troisième arbre (W3), un quatrième porte-satellites qui est réalisé sous forme solidaire en rotation du troisième porte-satellites, et une quatrième couronne qui est réalisée sous forme solidaire en rotation du septième arbre (W7) ;
le troisième frein (E) étant relié au septième arbre (W7), moyennant quoi le septième arbre (W7) peut être relié de manière solidaire en rotation au boîtier (G) au moyen du troisième frein (E) ;
le premier train planétaire (HRS1), le deuxième train planétaire (HRS2), le troisième train planétaire (RS3) et le quatrième train planétaire (RS4) étant chacun réalisés sous forme de train planétaire simple à rapport négatif,
et la première roue libre (D) bloquant le troisième arbre (W3) et la deuxième roue libre (F) bloquant le quatrième arbre (W4) par rapport au premier arbre (W1) dans des directions de rotation identiques.

3. Transmission (301) pour une bicyclette, comprenant un premier arbre (W1), un deuxième arbre (W2), un troisième arbre (W3), un quatrième arbre (W4), un cinquième arbre (W5), un sixième arbre (W6), un septième arbre (W7), un huitième arbre (W8), une première transmission partielle (HRS1, HRS2), une deuxième transmission partielle (RS3, RS4, RS5), une première roue libre (D), une deuxième roue libre (F), un premier frein (A), un deuxième frein (B), un troisième frein (C), un quatrième frein (E) et un boîtier (G) ;
la première transmission partielle (HRS1, HRS2) présentant un premier train planétaire (HRS1) et un deuxième train planétaire (HRS2),
le premier train planétaire (HRS1) présentant une première roue solaire qui est réalisée sous forme solidaire en rotation du deuxième arbre (W2), un premier porte-satellites qui est réalisée sous forme solidaire en rotation du troisième arbre (W3) et une première couronne,
le deuxième train planétaire (HRS2) présentant une deuxième roue solaire qui est réalisée sous forme solidaire en rotation du quatrième arbre (W4), un deuxième porte-satellites et une deuxième couronne, qui est réalisée sous forme solidaire en rotation du cinquième arbre (W5),
le premier porte-satellites étant relié de manière solidaire en rotation au deuxième porte-satellites,
la première couronne étant reliée de manière solidaire en rotation à la deuxième couronne,
la deuxième transmission partielle (RS3, RS4, RS5) présentant un troisième train planétaire (RS3),
le troisième train planétaire présentant une troisième roue solaire qui est réalisée sous forme solidaire en rotation du quatrième arbre (W4), un troisième porte-satellites qui est réalisé sous forme solidaire en rotation du premier arbre (W1) et une troisième couronne qui est réalisée sous forme solidaire en rotation du sixième arbre (W6),
la troisième roue solaire étant reliée de manière solidaire en rotation à la deuxième roue solaire,
le premier arbre (W1) réalisant un arbre d'entrée de la transmission (101) et étant réalisé pour être relié à des pédaliers d'une bicyclette,
la cinquième arbre (W5) réalisant un arbre de sortie de la transmission (101),
le premier frein (A) étant relié au sixième arbre (W6), moyennant quoi le sixième arbre (W6) peut être relié de manière solidaire en rotation au boîtier (G) au moyen du premier frein (A) ;
le deuxième arbre (W2) pouvant être relié de manière solidaire en rotation au boîtier (G) au moyen du troisième frein (C) ;
la deuxième transmission partielle (RS3, RS4, RS5) présentant en outre un quatrième train planétaire (RS4) avec une quatrième roue solaire qui est réalisée sous forme solidaire en rotation du troisième arbre (W3), un quatrième porte-satellites qui est réalisé sous forme solidaire en rotation du premier arbre (W1), une quatrième couronne qui est réalisée sous forme solidaire en rotation du septième arbre (W7) ;
le quatrième frein (E) étant relié au septième arbre (W7), moyennant quoi le septième arbre (W7) peut être relié de manière solidaire en rotation au boîtier (G) au moyen du quatrième frein (E) ;
la deuxième transmission partielle (RS3, RS4, RS5) présentant en outre un cinquième train planétaire (RS5) avec une cinquième roue solaire qui est réalisée sous forme solidaire en rotation du troisième porte-satellites, un cinquième porte-satellites qui est réalisé sous forme solidaire en rotation du deuxième arbre (W2), une cinquième couronne qui est réalisée sous forme solidaire en rotation du huitième arbre (W8) ;
le deuxième frein (B) étant relié au huitième arbre (W8), moyennant quoi le huitième arbre (W8) peut être relié de manière solidaire en rotation au boîtier (G) au moyen du deuxième frein (B) ;
le premier train planétaire (HRS1) et le troisième train planétaire (RS3) étant chacun réalisés sous forme de train planétaire simple à rapport négatif, le deuxième train planétaire (HRS2) étant réalisé sous forme de train planétaire simple à rapport positif ;
le quatrième train planétaire (RS4) étant réalisé sous forme de train planétaire à rapport négatif avec un pignon étagé dont le petit satellite engrène avec la quatrième roue solaire et dont le grand satellite engrène avec la quatrième couronne ;
le cinquième train planétaire (RS4) étant réalisé sous forme de train planétaire à rapport négatif avec un pignon étagé dont le petit satellite engrène avec la cinquième roue solaire et dont le grand satellite engrène avec la cinquième couronne ;
et la première roue libre (D) bloquant le troisième arbre (W3) et la deuxième roue libre (F) bloquant le quatrième arbre (W4) par rapport au premier arbre (W1) dans des directions de rotation identiques.

4. Transmission (401, 501) pour une bicyclette, comprenant un premier arbre (W1), un deuxième arbre (W2), un troisième arbre (W3), un quatrième arbre (W4), un cinquième arbre (W5), un sixième arbre (W6), une première transmission partielle (HRS1, HRS2), une deuxième transmission partielle (RS3), une première roue libre (D), une deuxième roue libre (F), un premier frein (A), un deuxième frein (Ca), un troisième frein (Cb), une troisième roue libre (Fca), une quatrième roue libre (Fcb) et un boîtier (G) ;
la première transmission partielle (HRS1, HRS2) présentant un premier train planétaire (HRS1) et un deuxième train planétaire (HRS2),
le premier train planétaire (HRS1) présentant une première roue solaire qui est réalisée sous forme solidaire en rotation du deuxième arbre (W2), un premier porte-satellites et une première couronne,
le deuxième train planétaire (HRS2) présentant une deuxième roue solaire qui est réalisée sous forme solidaire en rotation du quatrième arbre (W4), un deuxième porte-satellites qui est réalisé sous forme solidaire en rotation du premier arbre (W5) et une deuxième couronne qui est réalisée sous forme solidaire en rotation du troisième arbre (W3),
le premier porte-satellites étant relié de manière solidaire en rotation au deuxième porte-satellites,
la première couronne étant reliée de manière solidaire en rotation à la deuxième roue solaire,
la deuxième transmission partielle (RS3) présentant un troisième train planétaire (RS3),
le troisième train planétaire présentant une troisième roue solaire qui est réalisée sous forme solidaire en rotation du quatrième arbre (W4), un troisième porte-satellites qui est réalisé sous forme solidaire en rotation du premier arbre (W1) et une troisième couronne qui est réalisée sous forme solidaire en rotation du sixième arbre (W6),
la troisième roue solaire étant reliée de manière solidaire en rotation à la deuxième roue solaire,
le premier arbre (W1) réalisant un arbre d'entrée de la transmission (401, 501) et étant réalisé pour être relié à des pédaliers d'une bicyclette,
la cinquième arbre (W5) réalisant un arbre de sortie de la transmission (401, 501),
le premier frein (A) étant relié au sixième arbre (W6), moyennant quoi le sixième arbre (W6) peut être relié de manière solidaire en rotation au boîtier (G) au moyen du premier frein (A) ;
le deuxième arbre (W2) pouvant être relié au deuxième frein (Ca) par l'intermédiaire de la troisième roue libre (Fca), la troisième roue libre (Fca) pouvant être reliée de manière solidaire en rotation au boîtier (G) au moyen du deuxième frein (Ca),
le deuxième arbre (W2) pouvant être relié au troisième frein (Cb) par l'intermédiaire de la quatrième roue libre (Fcb), la quatrième roue libre (Fcb) pouvant être reliée de manière solidaire en rotation au boîtier (G) au moyen du troisième frein (Cb),
la troisième roue libre (Fca) et la quatrième roue libre (Fcb) bloquant le deuxième arbre (W2) dans des directions de rotation opposés ;
le premier train planétaire (HRS1), le deuxième train planétaire (HRS2) et le troisième train planétaire (RS3) étant chacun réalisés sous forme de train planétaire simple à rapport négatif, et
la première roue libre (D) bloquant le troisième arbre (W3) et la deuxième roue libre (F) bloquant le quatrième arbre (W4) par rapport au premier arbre (W1) dans des directions de rotation identiques.

5. Transmission (401, 501) pour une bicyclette, comprenant un premier arbre (W1), un deuxième arbre (W2), un troisième arbre (W3), un quatrième arbre (W4), un cinquième arbre (W5), un sixième arbre (W6), une première transmission partielle (HRS1, HRS2), une deuxième transmission partielle (RS3), une première roue libre (D), une deuxième roue libre (F), un premier frein (A), un deuxième frein (Ca), un troisième frein (Cb), un quatrième frein (E), une troisième roue libre (Fca), une quatrième roue libre (Fcb), une cinquième roue libre (Fa) et un boîtier (G) ;
la première transmission partielle (HRS1, HRS2) présentant un premier train planétaire (HRS1) et un deuxième train planétaire (HRS2),
le premier train planétaire (HRS1) présentant une première roue solaire qui est réalisée sous forme solidaire en rotation du deuxième arbre (W2), un premier porte-satellites et une première couronne,
le deuxième train planétaire (HRS2) présentant une deuxième roue solaire qui est réalisée sous forme solidaire en rotation du quatrième arbre (W4), un deuxième porte-satellites qui est réalisé sous forme solidaire en rotation du premier arbre (W5) et une deuxième couronne qui est réalisée sous forme solidaire en rotation du troisième arbre (W3),
le premier porte-satellites étant relié de manière solidaire en rotation au deuxième porte-satellites,
la première couronne étant reliée de manière solidaire en rotation à la deuxième roue solaire,
la deuxième transmission partielle (RS3, RS4) présentant un troisième train planétaire (RS3),
le troisième train planétaire présentant une troisième roue solaire qui peut être reliée au quatrième arbre (W4) par l'intermédiaire de la cinquième roue libre (Fa), un troisième porte-satellites qui est réalisé sous forme solidaire en rotation du premier arbre (W1) et une troisième couronne qui est réalisée sous forme solidaire en rotation du sixième arbre (W6),
la troisième roue solaire étant reliée de manière solidaire en rotation à la deuxième roue solaire,
le premier arbre (W1) réalisant un arbre d'entrée de la transmission (401, 501) et étant réalisé pour être relié à des pédaliers d'une bicyclette,
la cinquième arbre (W5) réalisant un arbre de sortie de la transmission (401, 501),
le premier frein (A) étant relié au sixième arbre (W6), moyennant quoi le sixième arbre (W6) peut être relié de manière solidaire en rotation au boîtier (G) au moyen du premier frein (A) ;
le deuxième arbre (W2) pouvant être relié au deuxième frein (Ca) par l'intermédiaire de la troisième roue libre (Fca), la troisième roue libre (Fca) pouvant être reliée de manière solidaire en rotation au boîtier (G) au moyen du deuxième frein (Ca),
le deuxième arbre (W2) pouvant être relié au troisième frein (Cb) par l'intermédiaire de la quatrième roue libre (Fcb), la quatrième roue libre (Fcb) pouvant être reliée de manière solidaire en rotation au boîtier (G) au moyen du troisième frein (Cb),
la troisième roue libre (Fca) et la quatrième roue libre (Fcb) bloquant le deuxième arbre (W2) dans des directions de rotation opposés ;
la deuxième transmission partielle (RS3, RS4) présentant en outre un quatrième train planétaire (RS4) avec une quatrième roue solaire qui est réalisée sous forme solidaire en rotation du troisième arbre (W3), un quatrième porte-satellites qui est réalisé sous forme solidaire en rotation du premier arbre (W1), une quatrième couronne qui est réalisée sous forme solidaire en rotation du septième arbre (W7) ;
le quatrième frein (E) étant relié au septième arbre (W7), moyennant quoi le septième arbre (W7) peut être relié de manière solidaire en rotation au boîtier (G) au moyen du quatrième frein (E) ;
le premier train planétaire (HRS1), le deuxième train planétaire (HRS2), le troisième train planétaire (RS3) et le quatrième train planétaire (RS4) étant chacun réalisés sous forme de train planétaire simple à rapport négatif,
et la première roue libre (D) bloquant le troisième arbre (W3) et la deuxième roue libre (F) bloquant le quatrième arbre (W4) par rapport au premier arbre (W1) dans des directions de rotation identiques.

6. Transmission (601) pour une bicyclette, comprenant un premier arbre (W1), un deuxième arbre (W2), un troisième arbre (W3), un quatrième arbre (W4), un cinquième arbre (W5), un sixième arbre (W6), un septième arbre (W7), un huitième arbre (W8), une première transmission partielle (HRS1, HRS2), une deuxième transmission partielle (RS3, RS4, RS5), une première roue libre (D), une deuxième roue libre (F), une troisième roue libre (Fca), une quatrième roue libre (Fcb), une cinquième roue libre (Fba), une sixième roue libre (Fbb), un premier frein (A), un deuxième frein (B), un troisième frein (Ca), un quatrième frein (Cb), un cinquième frein (E), un sixième frein (Ba), un septième frein (Bb), une septième roue libre (Fa) et un boîtier (G) ;
la première transmission partielle (HRS1, HRS2) présentant un premier train planétaire (HRS1) et un deuxième train planétaire (HRS2),
le premier train planétaire (HRS1) présentant une première roue solaire qui est réalisée sous forme solidaire en rotation du deuxième arbre (W2), un premier porte-satellites et une première couronne,
le deuxième train planétaire (HRS2) présentant une deuxième roue solaire qui est réalisée sous forme solidaire en rotation du troisième arbre (W3), un deuxième porte-satellites qui est réalisé sous forme solidaire en rotation du premier arbre (W5) et une deuxième couronne qui est réalisée sous forme solidaire en rotation du quatrième arbre (W4),
le premier porte-satellites étant relié de manière solidaire en rotation au deuxième porte-satellites,
la première couronne étant reliée de manière solidaire en rotation à la deuxième roue solaire,
la deuxième transmission partielle (RS3, RS4, RS5) présentant un troisième train planétaire (RS3),
le troisième train planétaire présentant une troisième roue solaire qui est réalisée sous forme solidaire en rotation du sixième arbre (W6), un troisième porte-satellites qui est réalisé sous forme solidaire en rotation du premier arbre (W1) et une troisième couronne qui est réalisée sous forme solidaire en rotation du quatrième arbre (W4),
le premier arbre (W1) réalisant un arbre d'entrée de la transmission (601) et étant réalisé pour être relié à des pédaliers d'une bicyclette,
la cinquième arbre (W5) réalisant un arbre de sortie de la transmission (601),
la deuxième transmission partielle (RS3, RS4, RS5) présentant en outre un quatrième train planétaire (RS4) avec une quatrième roue solaire qui est réalisée sous forme solidaire en rotation du troisième arbre (W3), un quatrième porte-satellites qui est réalisé sous forme solidaire en rotation du premier arbre (W1), une quatrième couronne qui peut être reliée au septième arbre (W7) par l'intermédiaire de la septième roue libre (Fa) ; le cinquième frein (E) étant relié au septième arbre (W7), moyennant quoi le septième arbre (W7) peut être relié de manière solidaire en rotation au boîtier (G) au moyen du quatrième frein (E) ;
la deuxième transmission partielle (RS3, RS4, RS5) présentant en outre un cinquième train planétaire (RS5) avec une cinquième roue solaire qui est réalisée sous forme solidaire en rotation du troisième porte-satellites, un cinquième porte-satellites qui est réalisé sous forme solidaire en rotation du deuxième arbre (W2), une cinquième couronne qui est réalisée sous forme solidaire en rotation du huitième arbre (W8) ;
le deuxième arbre (W2) pouvant être relié au deuxième frein (Ca) par l'intermédiaire de la troisième roue libre (Fca), la troisième roue libre (Fca) pouvant être reliée de manière solidaire en rotation au boîtier (G) au moyen du deuxième frein (Ca),
le deuxième arbre (W2) pouvant être relié au troisième frein (Cb) par l'intermédiaire de la quatrième roue libre (Fcb), la quatrième roue libre (Fcb) pouvant être reliée de manière solidaire en rotation au boîtier (G) au moyen du troisième frein (Cb),
la troisième roue libre (Fca) et la quatrième roue libre (Fcb) bloquant le deuxième arbre (W2) dans des directions de rotation opposés ;
le huitième arbre (W8) pouvant être relié au sixième frein (Ba) par l'intermédiaire de la cinquième roue libre (Fba), la cinquième roue libre (Fba) pouvant être reliée de manière solidaire en rotation au boîtier (G) au moyen du sixième frein (Ba),
le huitième arbre (W8) pouvant être relié au septième frein (Bb) par l'intermédiaire de la sixième roue libre (Fbb), la sixième roue libre (Fbb) pouvant être reliée de manière solidaire en rotation au boîtier (G) au moyen du septième frein (Bb),
la cinquième roue libre (Fba) et la sixième roue libre (Fba) bloquant le huitième arbre (W8) dans des direction de rotation opposées ;
le premier frein (A) étant relié au sixième arbre (W6), moyennant quoi le sixième arbre (W6) peut être relié de manière solidaire en rotation au boîtier (G) au moyen du premier frein (A) ;
le premier train planétaire (HRS1), le deuxième train planétaire (HRS2), le troisième train planétaire (RS3), le quatrième train planétaire (RS4) et le cinquième train planétaire (RS5) étant chacun réalisés sous forme de train planétaire simple à rapport négatif, et
la première roue libre (D) bloquant le troisième arbre (W3) et la deuxième roue libre (F) bloquant le quatrième arbre (W4) par rapport au premier arbre (W1) dans des directions de rotation identiques.

7. Bicyclette ; **caractérisée par** une transmission selon l'une quelconque des revendications précédentes.

8. Bicyclette selon la revendication précédente ; **caractérisée en ce qu'**un plateau de la bicyclette est relié de manière solidaire en rotation au cinquième arbre (W5) .
